# FASCICULE DE BREVET EUROPEEN

(11) **EP 0 661 190 B1**
(45) Date de publication et mention de la délivrance du brevet: **16.04.1997**
(21) Numéro de dépôt: 94403035.2
(22) Date de dépôt: 27.12.1994
(51) Int. Cl.: B60N 2/22, B60N 2/44

(54) **Armature réglable de siège**
Verstellbare Sitzarmatur
Adjustable seat frame

(30) Priorité: 28.12.1993 FR 9315751
(43) Date de publication de la demande: 05.07.1995
(73) Titulaire: BERTRAND FAURE EQUIPEMENTS S.A., F-92100 Boulogne (FR)
(72) Inventeur: Canteleux, Joel, F-28320 Armenonville (FR)
(74) Mandataire: Burbaud, Eric

(56) Documents cités:
- EP-A- 0 080 633
- EP-A- 0 363 261
- DE-A- 3 911 763
- DE-A- 3 943 008
- US-A- 3 361 474
- US-A- 4 402 546

## Description

La présente invention concerne les armatures réglables de siège, et les sièges équipés de telles armatures.

En particulier, l'invention concerne des armatures de siège comportant deux bâtis articulés l'un à l'autre, dits respectivement premier et deuxième bâti, le deuxième bâti étant monté sur le premier bâti au moyen de pivots.

L'invention s'applique particulièrement, mais non exclusivement, aux sièges de véhicules, notamment véhicules automobiles.

La plupart des sièges de véhicule comportent une armature constituée de deux bâtis articulés l'un à l'autre, un pour l'assise du siège, l'autre pour le dossier du siège.

En outre, dans certains cas, l'armature du dossier du siège est elle-même constituée de deux bâtis articulés l'un à l'autre, comme illustré par exemple dans le document US-A-4 626 028.

Dans tous les cas, ces montages pivotants doivent être particulièrement résistants pour supporter les efforts qui peuvent être exercés sur les différentes parties du siège, et ils doivent aussi permettre une commande aisée du mouvement de pivotement du deuxième bâti par rapport au premier. Habituellement, on utilise pour cela des mécanismes à trains épicycloïdaux qui sont relativement complexes et coûteux.

Par ailleurs, le document US-A-3 361 474 divulgue une armature réglable de siège, comportant deux bâtis articulés l'un à l'autre, dits respectivement premier et deuxième bâtis, le deuxième bâti étant monté rotatif sur le premier bâti au moyen de pivots, l'armature de siège comportant au moins un ensemble de rainures de guidage et de commande associées, cet ensemble incluant au moins une rainure dite de guidage qui appartient au premier bâti et au moins une rainure dite de commande qui appartient au deuxième bâti, les rainures de guidage et de commande associées étant formées dans des plaques parallèles voisines, lesdites rainures de guidage et de commande associées s'étendant longitudinalement dans des directions non parallèles, l'armature réglable comportant en outre, pour chaque ensemble de rainures de guidage et de commande associées, un galet qui pénètre à la fois dans lesdites rainures de guidage et de commande associées en imposant ainsi une position angulaire du deuxième bâti par rapport au premier bâti, et l'armature de siège comportant en outre un mécanisme de commande agissant sur le galet pour déplacer ledit galet le long de la rainure de guidage, et pour entraîner ainsi la rotation du deuxième bâti autour des pivots.

Cette armature de siège comporte un mécanisme de commande conçu pour garantir l'irréversibilité du réglage, ce qui empêche d'utiliser un mécanisme de commande courant et peu coûteux.

La présente invention a notamment pour but de proposer une armature réglable de siège du type défini ci-dessus, qui soit simple, facile à commander, et qui résiste particulièrement bien aux efforts qui peuvent être exercés sur le deuxième bâti.

A cet effet, une armature de siège réglable telle que définie ci-dessus, est essentiellement caractérisée en ce qu'elle comporte deux ensembles de rainures de guidage et de commande associées et deux galets qui coopèrent chacun avec un ensemble de rainures de guidage et de commande associées, et qui sont reliés l'un à l'autre par une biellette elle-même commandée par le mécanisme de commande, les formes et la disposition des rainures de guidage et de commande étant prévues pour qu'un effort exercé sur le deuxième bâti ne provoque pas de glissement du galet dans les rainures, indépendamment du mécanisme de commande.

Ainsi, ce sont les rainures de guidage elles-mêmes et leur galet qui assurent en totalité l'irréversibilité du réglage de l'armature de siège, indépendamment du mécanisme de commande, qui peut donc être particulièrement simple.

Dans des formes de réalisation préférées de l'invention, on a recours en outre à l'une et/ou à l'autre des dispositions suivantes :
- les rainures de guidage et de commande associées comportent chacune un côté qui est en appui contre le galet correspondant en un point donné et qui exerce une force sur ce galet lorsqu'un effort est exercé sur le deuxième bâti, chacun desdits côtés présentant, au niveau du point d'appui susmentionné, une normale qui forme avec la force exercée par ce côté sur le galet, un angle inférieur à un angle prédéterminé dit angle de frottement qui est caractéristique des matériaux respectifs du galet et du bâti auquel appartient la rainure considérée, l'angle de frottement constituant l'angle limite au-delà duquel le galet pourrait glisser dans ladite rainure considérée ;
- les galets sont immobilisés en rotation par rapport à la biellette, pour empêcher lesdits galet de rouler librement dans les rainures de guidage et de commande correspondantes ; ainsi, lorsque le deuxième bâti subit un effort, même si les galets ont tendance à glisser sur un côté d'une des rainures, ceci n'entraîne pas un roulement sur le côté de l'autre rainure ; de plus, cette disposition permet d'utiliser des galets qui ne sont pas symétriques de révolution ;
- les pivots sont montés avec jeu dans des lumières oblongues qui s'étendent selon une direction non parallèle aux rainures de guidage ;
- un ressort est monté entre les premier et deuxième bâtis pour rattraper au repos tout jeu de montage entre ces deux bâtis ;
- le premier bâti constitue l'armature d'une partie inférieure d'un dossier de siège, et le deuxième bâti constitue l'armature d'une partie supérieure du dossier de siège ; - le deuxième bâti comporte un support sur lequel peut être fixée une ceinture de sécurité.

La présente invention a aussi pour objet un siège comportant une armature réglable telle que définie ci-dessus qui constitue l'armature de son dossier, et un enrouleur de ceinture de sécurité qui est fixé au support du deuxième bâti.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'une armature de dossier pour un siège de véhicule automobile, selon une forme de réalisation de l'invention,
- la figure 2 est une vue schématique simplifiée d'un côté de l'armature de la figure 1, la partie supérieure de cette armature étant en position relevée,
- la figure 3 est une vue schématique éclatée du côté de l'armature qui est représentée sur la figure 2,
- la figure 4 est une vue de détail d'un des galets de l'armature de la figure 1,
- la figure 5 est une vue schématique d'un siège de véhicule comportant l'armature de la figure 1, la partie supérieure de cette armature étant en position abaissée, et
- la figure 6 est une vue schématique illustrant les efforts exercés sur le galet de la figure 4.

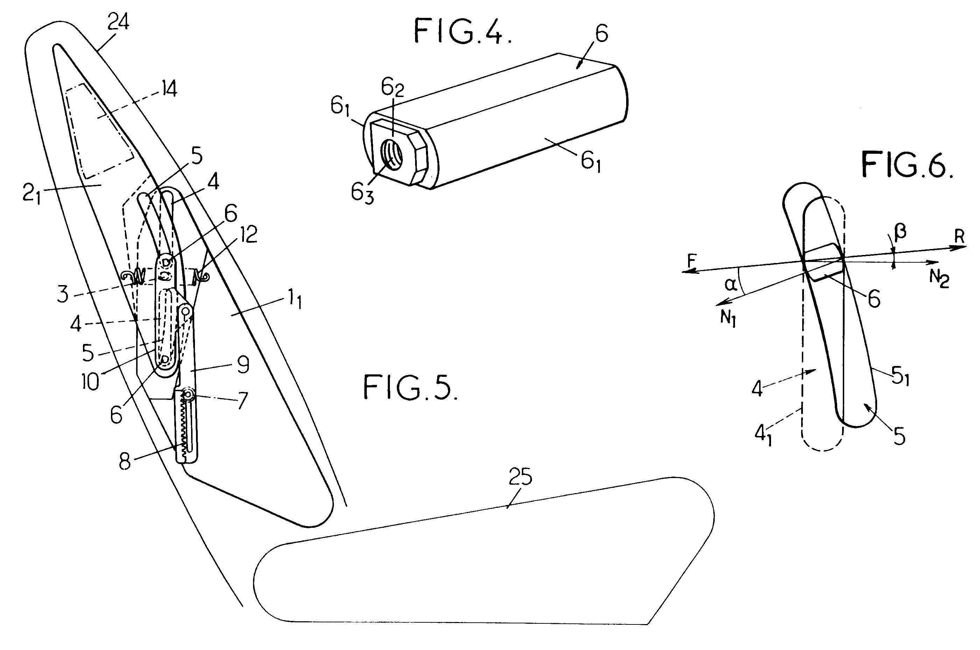

Dans l'exemple de réalisation représenté sur les dessins, l'invention est appliquée à un siège de véhicule automobile comportant un dossier 24 et une assise 25, visibles sur la figure 5.

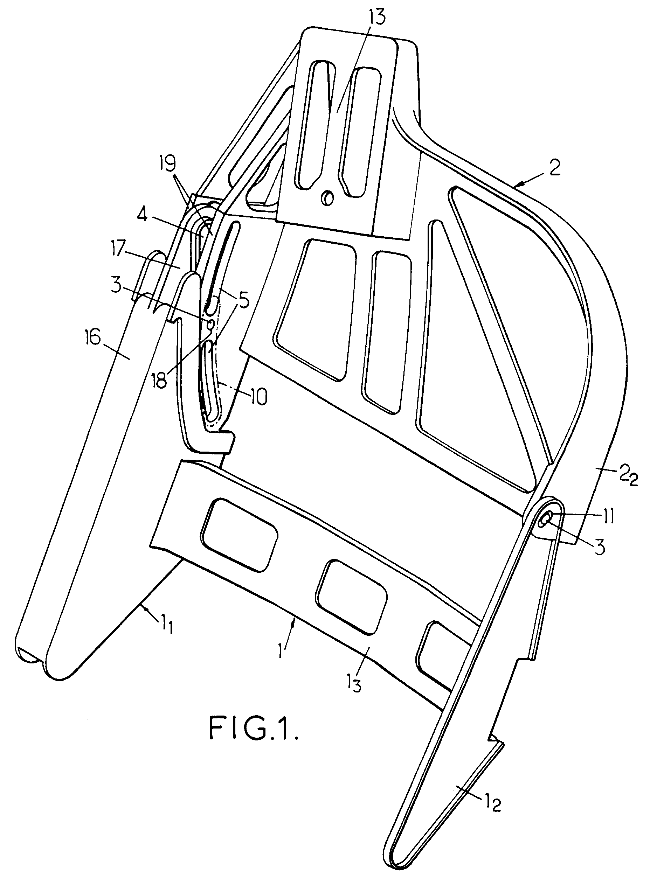

La figure 1 représente l'armature du dossier 24 du siège, cette armature étant constituée d'un bâti inférieur 1 sur lequel est articulé un bâti supérieur 2.

Le bâti inférieur 1 est constitué de deux flasques latéraux 1₁, 1₂, disposés dans des plans verticaux parallèles et solidarisés l'un à l'autre par une entretoise 1₃.

Classiquement, chacun des flasques latéraux 1₁, 1₂, peut être monté dans sa partie inférieure sur l'armature de l'assise 25 du siège, par exemple au moyen d'articulations. On peut ainsi régler l'inclinaison d'ensemble du dossier 24 du siège.

Dans l'exemple représenté, le flasque latéral 1₂ a la forme d'une plaque de forme générale plane, tandis que le flasque 1₁ comporte une partie inférieure épaisse 16, et une partie supérieure 17 d'épaisseur réduite, ayant la forme générale d'une plaque plane.

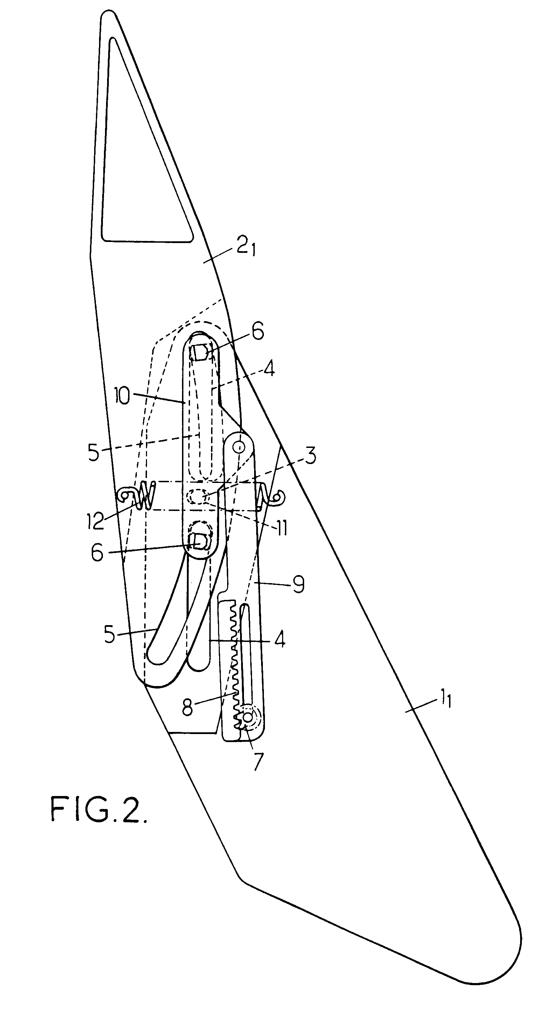

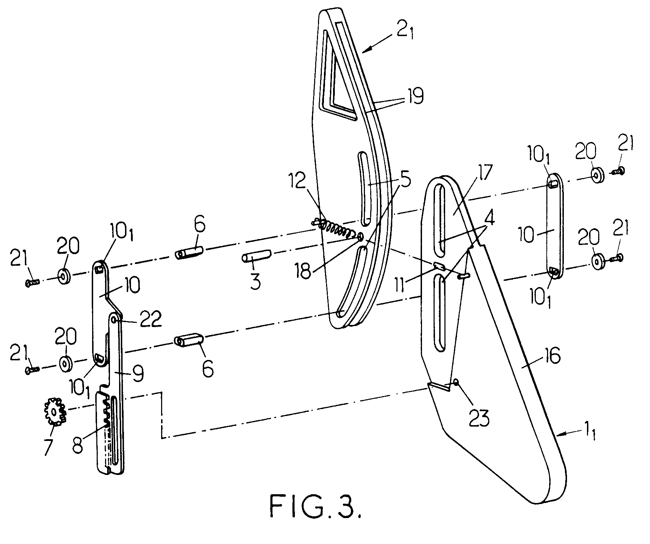

La partie supérieure 17 du flasque 1₁ comporte deux rainures traversantes 4 (voir figures 2 et 3), dites rainures de guidage, qui dans l'exemple représenté sont rectilignes et alignées l'une par rapport à l'autre.

Enfin, la partie supérieure 17 du flasque 1₁ comporte une lumière oblongue 11 (voir figures 2 et 3), qui s'étend de façon générale selon une direction non parallèle à la direction des rainures de guidage 4, et en particulier selon une direction perpendiculaire à la direction desdites rainures de guidage. Le centre de symétrie de la lumière oblongue 11 est, dans l'exemple représenté, disposé dans l'alignement des deux rainures de guidage 4.

Par ailleurs, le flasque 1₂ comporte également, dans sa partie supérieure, une lumière oblongue 11 (figure 1) disposée en correspondance avec la lumière oblongue 11 de la partie supérieure 17 du flasque 1₁.

Le bâti supérieur 2 de l'armature de siège est une structure rigide qui comporte un support 13 permettant la fixation d'un enrouleur 14 de ceinture de sécurité (figure 5). Le bâti supérieur 2 présente également deux flasques latéraux 2₁, 2₂, qui sont disposés dans des plans verticaux parallèles entre eux et parallèles aux flasques 1₁, 1₂ du bâti inférieur 1.

Le flasque 2₂ est percé d'un alésage cylindrique (non représenté), et un axe de pivotement 3 traverse cet alésage cylindrique ainsi que la lumière oblongue 11 du flasque 1₂.

D'autre part, le flasque 2₁ du bâti supérieur 2 comporte deux plaques planes 19, verticales et parallèles, qui sont disposées en chape de part et d'autre de la partie supérieure 17 du flasque 1₁. Chacune de ces deux plaques 19 est percée d'un alésage cylindrique 18, disposé en correspondance avec l'alésage cylindrique du flasque 2₁, ces deux alésages cylindriques 18 étant traversés par un axe de pivotement 3 qui traverse également la lumière oblongue 11 de la partie supérieure 17 du flasque 1₁.

Chacune des deux plaques 19 comporte deux rainures 5 traversantes, dites rainures de commande, qui dans le cas général s'étendent longitudinalement de façon non parallèle aux rainures de guidage 4, et qui dans l'exemple représenté ont une forme courbe, avec un centre de courbure disposé vers l'arrière du dossier du siège. Plus particulièrement, dans l'exemple représenté, les rainures de commande 5 ont chacune la forme d'un arc de cercle.

Dans tous les cas, les rainures 5 ne doivent pas présenter une forme d'arc de cercle centré sur l'axe de pivotement 3.

Chaque rainure de commande 5 d'une des plaques 19 est disposée en correspondance avec une rainure de commande de l'autre plaque 19. De plus, chaque paire de rainures de commande 5 en correspondance est associée à une rainure de guidage 4 qui, vue en projection sur un plan parallèle aux plaques 17 et 19, coupe en un point la projection desdites deux rainures de commande 5 sur ce même plan.

Comme on peut le voir en particulier sur les figures 2 et 3, chaque rainure de guidage 4 est traversée par un galet 6, qui traverse également deux rainures de commande 5 appartenant chacune à une plaque 19 du flasque 2₁.

Un de ces galets est représenté en détail sur la figure 4. Dans la forme de réalisation particulière représentée sur cette figure, le galet 6 comporte deux faces opposées 6₁ courbes, qui sont destinées à coopérer avec les côtés des rainures 4 et 5. De plus, le galet 6 s'étend axialement entre deux extrémités qui comportent chacune une tête saillante 6₂ ne présentant pas de symétrie de révolution, cette tête 6₂ étant percée d'un alésage fileté axial 6₃.

Comme représenté en particulier sur la figure 3, les deux galets 6 sont reliés entre eux par deux biellettes 10 disposées de chaque côté des plaques 19. Chaque biellette 10 comporte deux évidements 10₁ qui présentent une forme complémentaire des têtes 6₂ des galets, de sorte que lesdites têtes 6₂ des galets sont emboîtées sans jeu dans les évidements 10₁. Ainsi, les galets 6 sont immobilisés en rotation par rapport aux biellettes 10, de sorte qu'ils ne se déplacent dans les rainures 4, 5 qu'en glissement. De plus, les biellettes 10 sont maintenues sur les galets 6 par des rondelles 20 elles-mêmes maintenues par des vis 21 vissées dans les alésages filetés 6₃ des galets.

Une des biellettes 10, par exemple celle qui est disposée vers l'extérieur du siège, est connectée à une tige de commande 9 par l'intermédiaire d'un pivot 22, cette tige de commande 9 étant solidaire d'une crémaillère 8 qui s'engrène avec un pignon 7 dont l'axe est monté dans un alésage 23 du flasque 1₁. Le pignon 7 peut être commandé directement ou indirectement par une molette accessible à un utilisateur du siège, ou par un moteur électrique.

Enfin, un ressort 12 est monté en tension entre les flasques 1₁ et 2₁, de façon à rattraper au repos le jeu de montage qui peut exister entre lesdits flasques, ceci afin d'éviter des vibrations entre ces deux pièces pendant le déplacement du véhicule.

Le dispositif qui vient d'être décrit fonctionne comme suit. Lorsque les deux galets 6 sont situés respectivement aux extrémités supérieures des deux rainures de guidage 4, comme représenté sur la figure 2, le bâti supérieur 2 est dans une position relevée, c'est-à-dire qu'il forme un angle inférieur à 180° avec le bâti inférieur 1. Lorsqu'on déplace les galets 6 vers le bas dans les rainures de guidage 4, au moyen du pignon 7, de la crémaillère 8, de la tige de commande 9 et des biellettes 10, les galets 6 imposent au bâti supérieur 2 un mouvement de rotation autour des pivots 3, ce mouvement étant imposé par l'action des galets 6 sur les rainures de commande 5.

Au cours de ce mouvement, le bâti supérieur 2 pivote vers l'arrière jusqu'à la position représentée sur la figure 5, dans laquelle les galets 6 sont situés à l'extrémité inférieure des rainures de guidage 4, et dans laquelle le bâti supérieur 2 forme avec le bâti inférieur 1, un angle sensiblement égal à 180°. Au cours dudit mouvement, les pivots 3 situés de chaque côté du siège se déplacent légèrement dans les trous oblongs 11 des flasques 1₁, 1₂.

Afin d'éviter que les efforts exercés sur le bâti supérieur 2, notamment les efforts d'appui de l'utilisateur ou les efforts de traction dus à la ceinture de sécurité fixée sur le support 13 par l'enrouleur 14, entraînent un déréglage du siège et/ou une détérioration du mécanisme de réglage, il est souhaitable de faire en sorte qu'un effort exercé sur le bâti supérieur 2 ne provoque pas de glissement des galets 6 dans leurs rainures. Ce résultat est atteint comme expliqué ci-après.

Comme représenté sur la figure 6, lorsqu'un effort est exercé sur le bâti supérieur 2, cet effort se traduit par une force F exercée sur chaque galet 6 par un côté 5₁ des deux rainures de commande 5 dans lesquelles est engagé ce galet (chaque plaque 19 exerce sur le galet 6 une force F/2). Cette force F s'exerce au point de contact entre le côté 5₁ et le galet 6. La force F fait un angle α avec la normale commune N₁ au côté 5₁ et au rayon de courbure du galet 6, au niveau du point de contact entre ce côté 5₁ et le galet 6.

D'autre part, le galet 6 subit une force de réaction R de la part d'un côté 4₁ de la rainure de guidage 4 associée aux deux rainures de commande 5 susmentionnées. Cette force R s'exerce au point de contact entre le côté 4₁ et le galet 6, elle a même valeur que la force F, elle est dirigée dans la même direction et dans un sens opposé à ladite force F, et elle fait un angle β avec la normale commune N₂ au côté 4₁ et au rayon de courbure du galet 6, au niveau du point de contact entre ledit côté 4₁ et le galet 6.

Pour éviter qu'un effort exercé sur le bâti supérieur 2 se traduise par un glissement involontaire des galets 6 dans les rainures, il est nécessaire que l'angle α soit inférieur à l'angle de frottement α₀ entre le galet 6 et le côté des rainures de commande 5, et que l'angle β soit inférieur à l'angle de frottement β₀ entre le galet 6 et le côté de la rainure de guidage 4.

Ces angles α₀ et β₀ sont caractéristiques des matériaux respectifs des bâtis inférieur 1 et supérieur 2 et du galet 6. Lorsque les bâtis 1 et 2 sont réalisés dans le même matériau, les angles α₀ et β₀ sont égaux.

Pour assurer que le siège ne risque pas de se dérégler en cas d'efforts importants exercés sur le bâti supérieur 2, la disposition et la courbure des rainures de commande 5 sont donc choisies pour que, sur toute la course des galets 6, les angles α et β soient respectivement inférieurs à α₀ et β₀.

L'invention n'est pas limitée à l'exemple particulier qui vient d'être décrit. Elle en couvre au contraire toutes les variantes (pourvu que l'on ne sorte pas de son cadre tel que défini par les revendications), notamment les variantes dans lesquelles :
- le flasque 2₁ comporterait une seule plaque 19 et le flasque 1₁ comporterait deux plaques 17 disposées en chape autour de la plaque 19 unique,
- le flasque 2₁ comporterait une seule plaque 19 montée en porte-à-faux sur un côté de la plaque 17,
- les rainures de guidage 4 seraient courbes tandis que les rainures de commande seraient droites,
- les rainures de guidage 4 et de commande 5 seraient toutes courbes,
- le bâti inférieur 1 comporterait les alésages cylindriques 18 et le bâti supérieur 2 comporterait les lumières oblongues 11,
- le pignon 7 et la crémaillère 8 seraient remplacés par un vérin à vis, ou par tout autre moyen de commande,
- les bâtis 1 et 2 constitueraient non plus l'armature d'un dossier de siège, mais l'armature d'une assise de siège.

## Revendications

1. Armature réglable de siège, comportant deux bâtis (1, 2) articulés l'un à l'autre, dits respectivement premier et deuxième bâtis, le deuxième bâti (2) étant monté rotatif sur le premier bâti au moyen de pivots (3), l'armature de siège comportant au moins un ensemble de rainures de guidage et de commande associées, cet ensemble incluant au moins une rainure dite de guidage (4) qui appartient au premier bâti (1) et au moins une rainure dite de commande (5) qui appartient au deuxième bati (2), les rainures de guidage et de commande associées étant formées dans des plaques parallèles voisines, lesdites rainures de guidage et de commande associées s'étendant longitudinalement dans des directions non parallèles, l'armature réglable comportant en outre, pour chaque ensemble de rainures de guidage (4) et de commande (5) associées, un galet (6) qui pénètre à la fois dans lesdites rainures de guidage et de commande associées en imposant ainsi une position angulaire du deuxième bâti (2) par rapport au premier bâti (1), et l'armature de siège comportant en outre un mécanisme de commande (7,8,9) agissant sur le galet (6) pour déplacer ledit galet le long de la rainure de guidage (4), et pour entraîner ainsi la rotation du deuxième bâti (2) autour des pivots (3),
l'armature de siège étant **caractérisée en ce qu**'elle comporte deux ensembles de rainures de guidage (4) et de commande (5) associées et deux galets (6) qui coopèrent chacun avec un ensemble de rainures de guidage et de commande associées, et qui sont reliés l'un à l'autre par une biellette (10) elle-même commandée par le mécanisme de commande, les formes et la disposition des rainures de guidage (4) et de commande (5) étant prévues pour qu'un effort exercé sur le deuxième bâti (2) ne provoque pas de glissement des galets (6) dans les rainures, indépendamment du mécanisme de commande.

2. Armature de siège selon la revendication 1, dans laquelle les rainures de guidage (4) et de commande (5) associées comportent chacune un côté (4₁, 5₁) qui est en appui contre le galet (6) correspondant en un point donné et qui exerce une force (R, F) sur ce galet lorsqu'un effort est exercé sur le deuxième bâti, chacun desdits côtés présentant, au niveau du point d'appui susmentionné, une normale (N₁, N₂) qui forme avec la force (R, F) exercée par ce côté sur le galet, un angle (α, β) inférieur à un angle prédéterminé (α₀, β₀), dit angle de frottement, qui est caractéristique des matériaux respectifs du galet (6) et du bâti (1, 2) auquel appartient la rainure considérée, l'angle de frottement constituant l'angle limite au-delà duquel le galet pourrait glisser dans ladite rainure considérée.

3. Armature de siège selon l'une quelconque des revendications 1 et 2, dans laquelle les galets (6) sont immobilisés en rotation par rapport à la biellette (10) pour empêcher lesdits galets de rouler librement dans les rainures de guidage et de commande correspondantes.

4. Armature de siège selon l'une quelconque des revendications précédentes, dans laquelle les pivots (3) sont montés avec jeu dans des lumières oblongues (11) qui s'étendent selon une direction non parallèle aux rainures de guidage (4).

5. Armature de siège selon l'une quelconque des revendications précédentes, comportant en outre un ressort (12) monté entre les premier et deuxième bâtis (1, 2) pour rattraper au repos tout jeu de montage pouvant exister entre ces deux bâtis.

6. Armature de siège selon l'une quelconque des revendications précédentes, constituant l'armature d'un dossier de siège, le premier bâti (1) constituant l'armature d'une partie inférieure du dossier de siège, et le deuxième bâti (2) constituant l'armature d'une partie supérieure du dossier de siège.

7. Armature de siège selon la revendication 6, dans laquelle le deuxième bâti (2) comporte un support (13) sur lequel peut être fixée une ceinture de sécurité.

8. Siège de véhicule comportant une armature selon la revendication 7, et un enrouleur (14) de ceinture de sécurité qui est fixé au support (13) du deuxième bâti (2).

## Claims

1. An adjustable seat framework including two frames (1, 2) articulated to one another, termed respectively first and second frame, the second frame (2) being rotatively mounted on the first frame by means of pivots (3), the seat framework including at least one set of associated guide and operating slots, said set including at least one slot termed guide slot (4) which belongs to the first frame (1) and at least one slot termed operating slot (5) which belongs to the second frame (2), the associated guide and operating slots being formed in neighboring parallel plates, said associated guide and operating slots extending longitudinally in non-parallel directions, the adjustable framework further including, for each set of associated guide (4) and operating (5) slots, a roller (6) which penetrates simultaneously into said associated guide and operating slots at the same time, thus imposing an angular position on the second frame (2) relative to the first frame (1), and the seat framework further including an operating mechanism (7,8,9) acting on the roller (6) in order to shift said roller along the guide slot (4), and in order thus to entrain the rotation of the second frame about the pivots (3),
the seat framework being characterized in that it includes two sets of associated guide (4) and operating (5) slots and two rollers (6) which each interact with one set of associated guide and operating slots and which are joined together by a link rod which is itself operated by the operating mechanism, the shapes and arrangement of the guide (4) and operating (5) slots being designed so that a load exerted on the second frame (2) does not cause the rollers (6) to slip in the slots, independently of the operating mechanism.

2. The seat framework as claimed in claim 1, wherein the associated guide (4) and operating (5) slots each include a side (4₁, 5₁) which bears against the corresponding roller (6) at a given point and which exerts a force (R,F) on this roller when a load is exerted on the second frame, each of said sides exhibiting, at the abovementioned bearing point, a normal (N₁,N₂) which together with the force (R,F) exerted by this side on the roller forms an angle (α, β) which is less than a predetermined angle (α₀,β₀), termed angle of friction, which is a characteristic of the respective materials of the roller (6) and of the frame (1, 2) to which the slot in question belongs, the angle of friction constituting the limit angle beyond which the roller could slip in said slot in question.

3. The seat framework as claimed in claim 1 or 2, wherein the rollers (6) are immobilized in terms of rotation relative to the link rod (10) in order to prevent said rollers from running freely in the corresponding guide and operating slots.

4. The seat framework as claimed in any one of the preceding claim, wherein the pivots (3) are mounted with clearance in oblong openings (11) which extend in a direction which is not parallel to the guide slots (4).

5. The seat framework as claimed in any one of the preceding claim, further including a spring (12) mounted between the first and second frames (1, 2) to take up any assembly clearance which there might be between these two frames at rest.

6. The seat framework as claimed in any one of the preceding claims, constituting the framework of a seat backrest, the first frame (1) constituting the framework of a lower part of the seat backrest, and the second frame (2) constituting the framework of an upper part of the seat backrest.

7. The seat framework as claimed in claim 6, wherein the second frame (2) includes a support (13) to which a safety belt may be fastened.

8. A vehicle seat including a framework as claimed in claim 7, and a safety belt winder (14) which is fastened to the support (13) of the second frame (2).

## Patentansprüche

1. Verstellbares Sitzgestell, das zwei Rahmen (1, 2) umfaßt, die miteinander beweglich verbunden sind und jeweils erster und zweiter Rahmen genannt werden, wobei der zweite Rahmen (2) mit Zapfen (3) drehbar am ersten Rahmen aufgebracht ist, das Sitzgestell wenigstens eine zusammengehörige Gruppe von Führungs- und Steuernuten aufweist, wobei diese Gruppe wenigstens eine Führungsnut (4) umfaßt, die zu dem ersten Rahmen (1) gehört, und wenigstens eine Steuernut (5), die zu dem zweiten Rahmen (2) gehört, wobei die zusammengehörigen Führungs- und Steuernuten sich in parallelen, benachbarten Platten befinden, wobei die zusammengehörigen Führungs- und Steuernuten sich longitudinal in nicht parallele Richtungen erstrecken, wobei das verstellbare Gestell außerdem für jede Gruppe von zusammengehörigen Führungs- (4) und Steuernuten (5) eine Rolle (6) aufweist, die sowohl die zusammengehörigen Führungs- als auch Steuernuten durchstößt und damit eine geneigte Position des zweiten Rahmens (2) in bezug auf den ersten Rahmen (1) bewirkt, und wobei das Sitzgestell außerdem einen Steuermechanismus (7, 8, 9) umfaßt, der auf die Rolle (6) einwirkt, so daß die Rolle entlang der Führungsnut (4) verschoben wird und auf diese Art die Drehung des zweiten Rahmens (2) um die Zapfen (3) veranlaßt wird, wobei das Sitzgestell
**dadurch gekennzeichnet ist, daß**
es zwei Gruppen von zusammengehörigen Führungs- (4) und Steuernuten (5) und zwei Rollen (6) umfaßt, die jede mit einer Gruppe von zusammengehörigen Führungs- und Steuernuten zusammenwirkt und die miteinander über einen Schwingarm (10) verbunden sind, der seinerseits durch den Steuermechanismus betätigt wird, wobei die Formen und die Anordnung der Führungs- (4) und Steuernuten (5) derartig sind, daß unabhängig vom Steuermechanismus eine auf den zweiten Rahmen (2) ausgeübte Kraft kein Gleiten der Rollen (6) in den Nuten hervorruft.

2. Sitzgestell nach Anspruch 1, bei dem die zusammengehörigen Führungs- (4) und Steuernuten (5) jeweils eine Seite (4₁, 5₁) aufweisen, die gegen die einem gegebenen Punkt entsprechende Rolle (6) drückt und eine Kraft (R, F) auf die Rolle ausübt, wenn eine Kraft auf den zweiten Rahmen ausgeübt wird, wobei jede der Seiten in Höhe des oben genannten Druckpunktes eine Normale (N₁, N₂) aufweisen, die mit der Kraft (R, F), die von der Seite auf die Rolle ausgeübt wird, einen Winkel (α, β) einschließt, der kleiner als ein vorgegebener Winkel (α₀, β₀), Reibungswinkel genannt, ist, welcher charakteristisch ist für die jeweiligen Materialien der Rolle (6) und des Rahmens (1, 2), zu welchem die betrachtete Nut gehört, wobei der Reibungswinkel den Grenzwinkel bildet, oberhalb dessen die Rolle in der besagten betrachteten Nut gleiten kann.

3. Sitzgestell nach einem der Ansprüche 1 und 2, bei welchem die Rollen (6) in bezug auf den Schwingarm (10) nicht drehbar sind, um zu verhindern, daß die besagten Rollen frei in den entsprechenden Führungs- und Steuernuten rollen.

4. Sitzgestell nach einem der vorangehenden Ansprüche, bei welchem die Zapfen (3) mit Spiel in den Langlöchern (11) angebracht sind, die sich in einer Richtung erstrecken, die nicht parallel zu den Führungsnuten (4) ist.

5. Sitzgestell nach einem der vorangehenden Ansprüche, das unter anderem eine Feder (12) zwischen erstem und zweitem Rahmen (1, 2) umfaßt, um jedes Montagespiel, das zwischen den beiden Rahmen bestehen kann, in eine Ruheposition zu zwingen.

6. Sitzgestell nach einem der vorangehenden Ansprüche, das das Gestell einer Rückenlehne des Sitzes bildet, wobei der erste Rahmen (1) das Gestell eines unteren Teils der Rückenlehne des Sitzes und der zweite Rahmen (2) das Gestell eines oberen Teils der Rückenlehne des Sitzes bildet.

7. Sitzgestell nach Anspruch 6, bei welchem der zweite Rahmen (2) einen Träger (13) umfaßt, auf welchem ein Sicherheitsgurt befestigt werden kann.

8. Fahrzeugsitz mit einem Gestell nach Anspruch 7 und einem Wickler (14) für einen Automatik-Sicherheitsgurt, der an dem Träger (13) des zweiten Rahmens (2) befestigt ist.
